# EUROPEAN PATENT APPLICATION

(11) **EP 4 753 172 A1**
(43) Date of publication of application: **03.06.2026**
(21) Application number: 24845236.9
(22) Date of filing: 13.06.2024
(51) Int. Cl.: H04B 10/118, H04J 14/02

(54) **OPTICAL COMMUNICATION SYSTEM, EARTH STATION DEVICE, SATELLITE STATION DEVICE, AND COMMUNICATION METHOD**

(30) Priority: 27.07.2023 JP 2023122576
(71) Applicant: Sumitomo Electric Industries, Ltd., Osaka-shi, Osaka 541-0041 (JP)
(72) Inventor: KAWASE Daisuke, Osaka-shi, Osaka 541-0041 (JP); OGAWA Shohei, Osaka-shi, Osaka 541-0041 (JP)
(74) Representative: Boult Wade Tennant LLP
(86) International application number: PCT/JP2024/021482
(87) International publication number: WO 2025/022854

(57) **Abstract**

An optical communication system includes: an earth station device; and a satellite station device configured to perform a relay process of relaying information that is transmitted and received between a communication terminal and the earth station device. In the relay process, the satellite station device performs information transmission with the communication terminal, using RF (Radio Frequency) signals, and performs information transmission with the earth station device, using optical signals including analog signals.

## Description

### TECHNICAL FIELD

The present disclosure relates to an optical communication system, an earth station device, a satellite station device, and a communication method.

This application claims priority on Japanese Patent Application No. 2023-122576 filed on July 27, 2023, the entire content of which is incorporated herein by reference.

### BACKGROUND ART

NON-PATENT LITERATURE 1 discloses a direct access communication system in which a radio repeater is installed in a HAPS (High Altitude Platform Station) that is an example of a satellite station device.

### CITATION LIST

### [NON-PATENT LITERATURE]

NON-PATENT LITERATURE 1: Yuki Hokazono and two others, "Studies toward Practical Application of HAPS in the Space RAN", NTT Technology Journal, Nippon Telegraph and Telephone Corporation, Oct. 1, 2022, Vol. 34, No. 10, pp. 17-22

### SUMMARY OF THE INVENTION

The optical communication system of the present disclosure includes: an earth station device; and a satellite station device configured to perform a relay process of relaying information that is transmitted and received between a communication terminal and the earth station device. In the relay process, the satellite station device performs information transmission with the communication terminal, using RF (Radio Frequency) signals, and performs information transmission with the earth station device, using optical signals including analog signals.

An aspect of the present disclosure can be realized not only as an earth station device including such a characteristic processing unit, but also as a communication method including such characteristic processes as steps, or a program for causing a computer to execute such steps. In addition, an aspect of the present disclosure can be realized as a semiconductor integrated circuit that realizes a part or the entirety of the earth station device.

An aspect of the present disclosure can be realized not only as a satellite station device including such a characteristic processing unit, but also as a communication method including such characteristic processes as steps, or a program for causing a computer to execute such steps. In addition, an aspect of the present disclosure can be realized as a semiconductor integrated circuit that realizes a part or the entirety of the satellite station device.

### BRIEF DESCRIPTION OF DRAWINGS

[FIG. 1] FIG. 1 shows a configuration of an optical communication system according to a first embodiment of the present disclosure.
[FIG. 2] FIG. 2 shows a configuration of an earth station device according to the first embodiment of the present disclosure.
[FIG. 3] FIG. 3 shows a configuration of a satellite station device according to the first embodiment of the present disclosure.
[FIG. 4] FIG. 4 shows an example of a communication sequence in the optical communication system according to the first embodiment of the present disclosure.
[FIG. 5] FIG. 5 shows a configuration of an optical communication system according to a second embodiment of the present disclosure.
[FIG. 6] FIG. 6 shows a configuration of an earth station device according to the second embodiment of the present disclosure.
[FIG. 7] FIG. 7 shows a configuration of a satellite station device according to the second embodiment of the present disclosure.

### DETAILED DESCRIPTION

Conventionally, in order to extend a communication coverage area in a communication system, a technology for relaying radio waves by using a satellite station device has been used.

### [Problems to be solved by the present disclosure]

Beyond the technology disclosed in NON-PATENT LITERATURE 1, a technology capable of realizing reduction in size and power consumption of a satellite station device while increasing feeder link capacity between an earth station device and the satellite station device is desired.

The present disclosure has been made to solve the above problems, and an object of the present disclosure is to provide an optical communication system, an earth station device, a satellite station device, and a communication method capable of realizing reduction in size and power consumption of the satellite station device while increasing feeder link capacity between the earth station device and the satellite station device.

### [Effects of the present disclosure]

According to the present disclosure, reduction in size and power consumption of a satellite station device can be realized while increasing feeder link capacity between an earth station device and the satellite station device.

### <Description of embodiments of the present disclosure>

First, the contents of embodiments of the present disclosure will be listed and described.
(1) An optical communication system according to an embodiment of the present disclosure includes: an earth station device; and a satellite station device configured to perform a relay process of relaying information that is transmitted and received between a communication terminal and the earth station device. In the relay process, the satellite station device performs information transmission with the communication terminal, using RF signals, and performs information transmission with the earth station device, using optical signals including analog signals.
   In the above configuration using optical signals including analog signals for information transmission between the satellite station device and the earth station device, feeder link capacity between the earth station device and the satellite station device can be increased, compared to the configuration using RF signals for information transmission between the satellite station device and the earth station device. In addition, compared to the configuration using optical signals including digital signals for information transmission between the satellite station device and the earth station device, a digital-analog conversion process is not required in the satellite station device, and optical signals can be transmitted using a smaller number of optical transceivers, whereby reduction in size and power consumption of the satellite station device can be realized, and a delay in the relay process can be reduced. Therefore, reduction in size and power consumption of the satellite station device can be realized while increasing the feeder link capacity between the earth station device and the satellite station device.
(2) In the above (1), the earth station device may generate a first optical signal including a first analog signal, and transmit the generated first optical signal to the satellite station device. The satellite station device may acquire the first analog signal from the first optical signal received from the earth station device, and transmit a first RF signal based on the acquired first analog signal to the communication terminal.
   In the above configuration, the feeder link capacity in downlink communication between the earth station device and the satellite station device can be increased. In addition, compared to the configuration using optical signals including digital signals for information transmission from the earth station device to the satellite station device, a process of converting digital signals into analog signals is not required in the satellite station device, and optical signals can be received using a smaller number of optical transceivers, whereby reduction in size and power consumption of the satellite station device can be realized, and a delay in the relay process can be reduced.
(3) In the above (2), the earth station device may generate the first optical signal that is intensity-modulated, phase-modulated, or frequency-modulated based on the first analog signal, and transmit the generated first optical signal to the satellite station device.
   In the above configuration, when generating a first optical signal that is intensity-modulated based on the first analog signal, the first optical signal can be generated with a simple configuration. Furthermore, when generating a first optical signal that is phase-modulated or frequency-modulated based on the first analog signal, transmission and reception of the first optical signal can be performed with high sensitivity between the earth station device and the satellite station device, compared to the case of using the intensity-modulated first optical signal.
(4) In the above (2) or (3), the earth station device may generate a plurality of first optical signals having different wavelengths, and transmit the generated plurality of first optical signals to the satellite station device.
   In the above configuration, the feeder link capacity in downlink communication between the earth station device and the satellite station device can be further increased.
(5) In any of the above (1) to (4), the satellite station device may receive a second RF signal from the communication terminal, generate a second optical signal including a second analog signal based on the received second RF signal, and transmit the generated second optical signal to the earth station device. The earth station device may acquire the second analog signal from the second optical signal received from the satellite station device.
   In the above configuration, the feeder link capacity in uplink communication between the earth station device and the satellite station device can be increased. In addition, compared to the configuration using optical signals including digital signals for information transmission from the satellite station device to the earth station device, a process of converting RF signals into digital signals is not required in the satellite station device, and optical signals can be transmitted using a smaller number of optical transceivers, whereby reduction in size and power consumption of the satellite station device can be realized, and a delay in the relay process can be reduced.
(6) In the above (5), the satellite station device may generate the second optical signal that is intensity-modulated, phase-modulated, or frequency-modulated based on the second analog signal, and transmit the generated second optical signal to the earth station device.
   In the above configuration, when generating a second optical signal that is intensity-modulated based on the second analog signal, the second optical signal can be generated with a simple configuration. Furthermore, when generating a second optical signal that is phase-modulated or frequency-modulated based on the second analog signal, transmission and reception of the second optical signal can be performed with high sensitivity between the earth station device and the satellite station device, compared to the case of using the intensity-modulated second optical signal.
(7) In the above (5) or (6), the satellite station device may generate a plurality of second optical signals having different wavelengths, and transmit the generated plurality of second optical signals to the earth station device.
   In the above configuration, the feeder link capacity in uplink communication between the earth station device and the satellite station device can be further increased.
(8) In the above (1), the earth station device may generate a first optical signal including a first analog signal, and transmit the first optical signal to the satellite station device via a first optical antenna, the satellite station device may receive the first optical signal from the earth station device via a second optical antenna, acquire the first analog signal from the received first optical signal, and transmit a first RF signal based on the acquired first analog signal to the communication terminal, the satellite station device may receive a second RF signal from the communication terminal, generate a second optical signal including a second analog signal based on the received second RF signal, and transmit the second optical signal to the earth station device via the second optical antenna, and the earth station device may receive the second optical signal from the satellite station device via the first optical antenna, and acquire the second analog signal from the received second optical signal.
   In this configuration, transmission and reception of optical signals between the earth station device and the satellite station device can be performed using a smaller number of optical antennae.
(9) In the above (1), the earth station device may generate a first optical signal including a first analog signal, and transmit the generated first optical signal to the satellite station device, the satellite station device may acquire the first analog signal from the first optical signal received from the earth station device, and transmit a first RF signal based on the acquired first analog signal to the communication terminal, the satellite station device may receive a second RF signal from the communication terminal, generate a second optical signal including a second analog signal based on the received second RF signal, and transmit the generated second optical signal to the earth station device, the earth station device may acquire the second analog signal from the second optical signal received from the satellite station device, and the satellite station device may relay the first analog signal and the second analog signal between the earth station device and the communication terminal according to a bent-pipe method, and transmit and receive the first RF signal and the second RF signal to and from the communication terminal according to a direct access method.
   **In** the above configuration, the relay process between the communication terminal and the earth station device can be performed with a simple configuration.
(10) An earth station device according to the embodiment of the present disclosure includes an optical communication unit configured to transmit and receive signals to and from a communication terminal via a satellite station device configured to transmit and receive RF signals to and from the communication terminal. The optical communication unit performs at least one of: transmission of optical signals including analog signals to the satellite station device; and reception of optical signals including analog signals from the satellite station device.
   In the configuration of transmitting optical signals including analog signals between the earth station device and the satellite station device, feeder link capacity between the earth station device and the satellite station device can be increased, compared to the configuration of transmitting RF signals between the earth station device and the satellite station device. In addition, compared to the configuration of transmitting optical signals including digital signals between the earth station device and the satellite station device, a digital-analog conversion process is not required in the satellite station device, and optical signals can be transmitted using a smaller number of optical transceivers, whereby reduction in size and power consumption of the satellite station device can be realized, and a delay in the relay process can be reduced. Therefore, reduction in size and power consumption of the satellite station device can be realized while increasing the feeder link capacity between the earth station device and the satellite station device.
(11) A satellite station device according to the embodiment of the present disclosure is a satellite station device performing a relay process of relaying information that is transmitted and received between a communication terminal and an earth station device. The satellite station device includes: an RF communication unit configured to perform information transmission with the communication terminal using RF signals; and an optical communication unit configured to perform information transmission with the earth station device using optical signals including analog signals.
   In the above configuration using optical signals including analog signals for information transmission between the satellite station device and the earth station device, feeder link capacity between the earth station device and the satellite station device can be increased, compared to the configuration using RF signals for information transmission between the satellite station device and the earth station device. In addition, compared to the configuration using optical signals including digital signals for information transmission between the satellite station device and the earth station device, a digital-analog conversion process is not required in the satellite station device, and optical signals can be transmitted using a smaller number of optical transceivers, whereby reduction in size and power consumption of the satellite station device can be realized, and a delay in the relay process can be reduced. Therefore, reduction in size and power consumption of the satellite station device can be realized while increasing the feeder link capacity between the earth station device and the satellite station device.
(12) A communication method according to the embodiment of the present disclosure is a communication method performed in an optical communication system including an earth station device, and a satellite station device that performs a relay process of relaying information that is transmitted and received between a communication terminal and the earth station device. The method includes: the satellite station device performing information transmission with the communication terminal, using RF signals; and the satellite station device performing information transmission with the earth station device, using optical signals including analog signals.

In the above method using optical signals including analog signals for information transmission between the satellite station device and the earth station device, feeder link capacity between the earth station device and the satellite station device can be increased, compared to the method using RF signals for information transmission between the satellite station device and the earth station device. In addition, compared to the method using optical signals including digital signals for information transmission between the satellite station device and the earth station device, a digital-analog conversion process is not required in the satellite station device, and optical signals can be transmitted using a smaller number of optical transceivers, whereby reduction in size and power consumption of the satellite station device can be realized, and a delay in the relay process can be reduced. Therefore, reduction in size and power consumption of the satellite station device can be realized while increasing the feeder link capacity between the earth station device and the satellite station device.

Hereinafter, embodiments of the present disclosure will be described with reference to the drawings. In the drawings, the same or corresponding parts are denoted by the same reference signs, and descriptions thereof are not repeated. At least some parts of the embodiments described below may be combined together as desired.

### <First embodiment>

### [Configuration and basic operation]

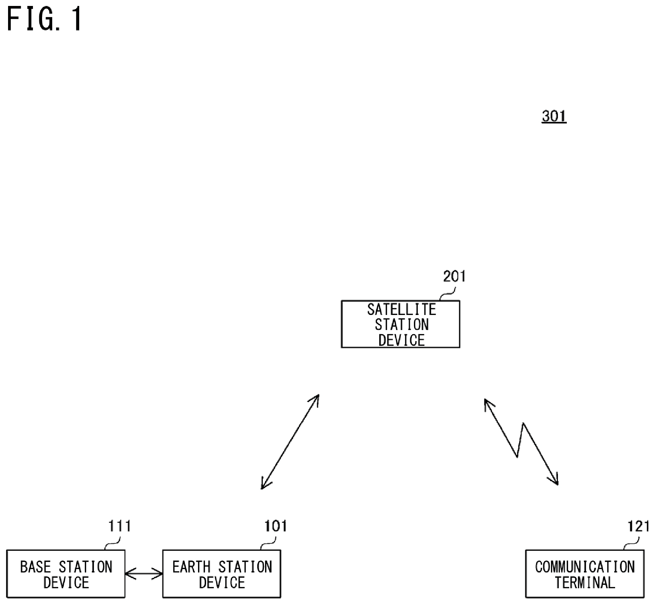

FIG. 1 shows a configuration of an optical communication system according to the first embodiment of the present disclosure. With reference to FIG. 1, an optical communication system 301 includes an earth station device 101 and a satellite station device 201.

The earth station device 101 is provided on the earth. More specifically, the earth station device 101 is provided in the troposphere, for example, on the ground. The earth station device 101 may be provided on the sea, or may be a portable device that can be mounted on a mobile object such as an aircraft. The earth station device 101 and one or more communication terminals 121 transmit and receive communication data. For example, the communication terminal 121 is a mobile communication terminal located on the earth.

The satellite station device 201 is an artificial satellite station provided outside the troposphere. For example, the satellite station device 201 is provided in the stratosphere. The satellite station device 201 performs a relay process of relaying information transmitted and received between the communication terminal 121 and the earth station device 101. In the relay process, the satellite station device 201 performs information transmission using RF signals with the communication terminal 121, and performs information transmission using optical signals including analog signals with the earth station device 101.

More specifically, the earth station device 101 receives an analog signal SAd including communication data from a base station device 111. The earth station device 101 generates a downlink optical signal SPd1 including the received analog signal SAd, and transmits the generated downlink optical signal SPd1 to the satellite station device 201. The analog signal SAd is an example of a first analog signal. The downlink optical signal SPd1 is an example of a first optical signal.

For example, the earth station device 101 generates a plurality of downlink optical signals SPd1 having different wavelengths. More specifically, the earth station device 101 receives a plurality of analog signals SAd from the base station device 111 via a plurality of transmission paths. The earth station device 101 generates downlink optical signals SPdla, SPdlb including the received plurality of analog signals SAd, and transmits the generated downlink optical signals SPdla, SPdlb to the satellite station device 201. The downlink optical signal SPdla is a downlink optical signal SPd1 having a wavelength λ1a. The downlink optical signal SPdlb is a downlink optical signal SPd1 having a wavelength λ1b. The earth station device 101 may generate and transmit three or more downlink optical signals SPd1 having different wavelengths.

The satellite station device 201 acquires a plurality of analog signals SAd from the downlink optical signals SPdla, SPdlb received from the earth station device 101, and transmits an RF signal SRd based on the acquired plurality of analog signals SAd to the communication terminal 121.

The satellite station device 201 receives an RF signal SRu including communication data from the communication terminal 121. The satellite station device 201 generates an uplink optical signal SPul including an analog signal SAu based on the received RF signal SRu, and transmits the generated uplink optical signal SPul to the earth station device 101. The analog signal SAu is an example of a second analog signal. The uplink optical signal SPul is an example of a second optical signal.

For example, the satellite station device 201 generates a plurality of uplink optical signals SPul having different wavelengths. More specifically, the satellite station device 201 receives a plurality of RF signals SRu from a plurality of communication terminals 121, and generates a plurality of analog signals SAu based on the received plurality of RF signals SRu, respectively. The satellite station device 201 generates uplink optical signals SPula, SPulb including the generated plurality of analog signals SAu, and transmits the generated uplink optical signals SPula, SPulb to the earth station device 101. The uplink optical signal SPula is an uplink optical signal SPul having a wavelength λ2a. The uplink optical signal SPulb is an uplink optical signal SPul having a wavelength λ2b. The satellite station device 201 may generate and transmit three or more uplink optical signals SPul having different wavelengths. For example, the wavelengths λ1a, λ1b of the downlink optical signals SPdla, SPdlb and the wavelengths λ2a, λ2b of the uplink optical signals SPula, SPulb are different from each other.

The earth station device 101 acquires a plurality of analog signals SAu from the uplink optical signals SPula, SPdlb received from the satellite station device 201. The earth station device 101 transmits the acquired plurality of analog signals SAu to the base station device 111.

The satellite station device 201 relays the analog signals SAd, SAu between the earth station device 101 and the communication terminal 121 according to a bent-pipe method. More specifically, for example, while the satellite station device 201 performs frequency conversion and amplification of the signals, the satellite station device 201 transmits the RF signal SRd based on the analog signal SAd to the communication terminal 121 and transmits the uplink optical signal SPul including the analog signal SAu to the earth station device 101 without modulating or demodulating the analog signals SAd, SAu.

The satellite station device 201 also transmits and receives RF signals SRd, SRu to and from the communication terminal 121 according to a direct access method. More specifically, the satellite station device 201 transmits the RF signal SRd directly to the communication terminal 121 and receives the RF signal SRu directly from the communication terminal 121 without an intervening base station.

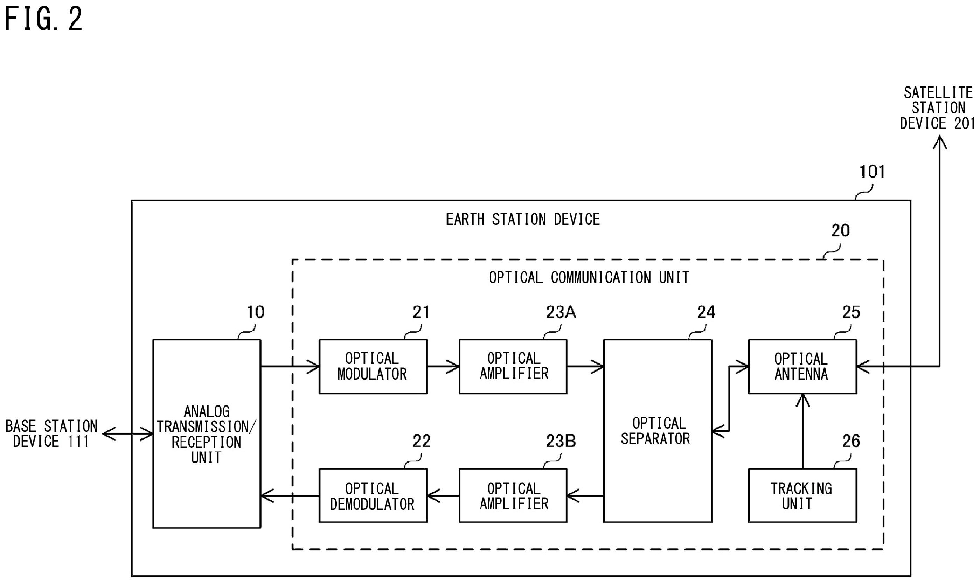

FIG. 2 shows a configuration of an earth station device according to the first embodiment of the present disclosure. With reference to FIG. 2, an earth station device 101 includes an analog transmission/reception unit 10 and an optical communication unit 20. The optical communication unit 20 includes an optical modulator 21, an optical demodulator 22, optical amplifiers 23A, 23B, an optical separator 24, an optical antenna 25, and a tracking unit 26. The optical antenna 25 is an example of a first antenna. The analog transmission/reception unit 10 and a part or the entirety of the tracking unit 26 are realized by, for example, processing circuitry including one or more processors.

The optical communication unit 20 transmits and receives signals to and from the communication terminal 121 via the satellite station device 201. The optical communication unit 20 transmits the downlink optical signal SPd1 to the satellite station device 201, and receives the uplink optical signal SPul from the satellite station device 201. The optical antenna 25 is composed of a lens, for example.

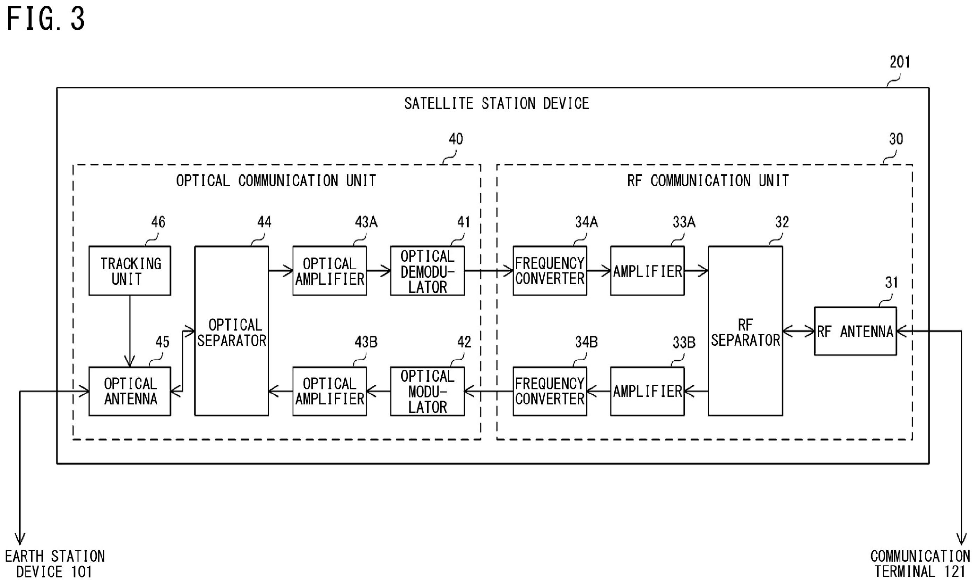

FIG. 3 shows a configuration of a satellite station device according to the first embodiment of the present disclosure. With reference to FIG. 3, the satellite station device 201 includes an RF communication unit 30 and an optical communication unit 40. The RF communication unit 30 includes an RF antenna 31, an RF separator 32, amplifiers 33A, 33B, and frequency converters 34A, 34B. The optical communication unit 40 includes an optical demodulator 41, an optical modulator 42, optical amplifiers 43A, 43B, an optical separator 44, an optical antenna 45, and a tracking unit 46. The optical antenna 45 is an example of a second antenna. A part or the entirety of the tracking unit 46 is realized by, for example, processing circuitry including one or more processors.

The RF communication unit 30 performs information transmission using the RF signals SRd, SRu with the communication terminal 121. The optical communication unit 40 performs information transmission using the downlink optical signal SPd1 including the analog signal SAd and the uplink optical signal SPul including the analog signal SAu, with the earth station device 101. The optical antenna 45 is composed of a lens, for example.

With reference to FIG. 2 and FIG. 3, the tracking unit 26 in the earth station device 101 regularly or irregularly transmits laser light of a predetermined intensity for a beacon via the optical antenna 25. Also, the tracking unit 46 in the satellite station device 201 regularly or irregularly transmits laser light of a predetermined intensity for a beacon via the optical antenna 45. The tracking unit 26 may transmit the laser light for the beacon via an optical antenna other than the optical antenna 25. Also, the tracking unit 46 may transmit the laser light for the beacon via an optical antenna other than the optical antenna 45.

The tracking unit 46 in the satellite station device 201 captures the position of the earth station device 101 according to a predetermined control algorithm for capturing and tracking the earth station device 101, and adjusts the transmission direction of the laser light from the optical antenna 45 so as to track the earth station device 101. More specifically, the tracking unit 46 measures the amount of light received by the optical antenna 45, out of the laser light transmitted from the optical antenna 25, and detects the position of the earth station device 101 based on the measurement result. The tracking unit 46 adjusts the direction of the optical antenna 45 so that the laser light can be transmitted toward the detected position of the earth station device 101.

The tracking unit 26 in the earth station device 101 captures the position of the satellite station device 201 according to a predetermined control algorithm for capturing and tracking the satellite station device 201, and adjusts the transmission direction of the laser light from the optical antenna 25 so as to track the satellite station device 201. More specifically, the tracking unit 26 measures the amount of light received by the optical antenna 25, out of the laser light transmitted from the optical antenna 45, and detects the position of the satellite station device 201 based on the measurement result. The tracking unit 26 adjusts the direction of the optical antenna 25 so that the laser light can be transmitted toward the detected position of the satellite station device 201.

For example, the optical communication system 301 adopts a TDD (Time Division Duplex) method. More specifically, in the optical communication system 301, a downlink communication period CPd in which downlink communication from the base station device 111 to the communication terminal 121 is performed and an uplink communication period CPu in which uplink communication from the communication terminal 121 to the base station device 111 are switched and alternately repeated. For example, the satellite station device 201 performs a relay process according to TDD based on the timing of the clock of the satellite station device 201. More specifically, the downlink communication period CPd and the uplink communication period CPu are set based on transmission and reception timings of the RF signals SRd, SRu by the RF antenna 31 in the satellite station device 201.

The earth station device 101 transmits the downlink optical signals SPdla, SPdlb to the satellite station device 201 during the downlink communication period CPd. The satellite station device 201 transmits the uplink optical signals SPula, SPulb to the earth station device 101 during the uplink communication period CPu.

### (Downlink communication)

The analog transmission/reception unit 10 in the earth station device 101 receives the analog signal SAd including communication data from the base station device 111. The analog transmission/reception unit 10 outputs the received analog signal SAd to the optical modulator 21. The analog signal SAd may be an IF-band signal or an RF-band signal.

The optical modulator 21 receives the analog signal SAd from the analog transmission/reception unit 10, and generates downlink optical signals SPdla, SPdlb by optically modulating the received analog signal SAd. The optical modulator 21 outputs the generated downlink optical signals SPdla, SPdlb to the optical amplifier 23A.

For example, the optical modulator 21 generates the downlink optical signals SPdla, SPdlb that are intensity-modulated based on the analog signal SAd. More specifically, the optical modulator 21 is a direct modulation type optical modulator that includes an LD (Laser Diode). The LD outputs, to the optical amplifier 23A, the downlink optical signals SPdla, SPd1b, the intensity of which corresponds to the level of the analog signal SAd received from the analog transmission/reception unit 10.

The optical modulator 21 may be an external modulation type optical modulator that includes an LD and an external modulator. In this case, the LD outputs light of a constant intensity to the external modulator. Using the light received from the LD, the external modulator outputs, to the optical amplifier 23A, the downlink optical signals SPdla, SPd1b, the intensity of which corresponds to the level of the analog signal SAd received from the analog transmission/reception unit 10. The external modulator may be, for example, an electro-absorption modulator or a Mach-Zehnder modulator.

The optical amplifier 23A amplifies the downlink optical signals SPdla, SPdlb received from the optical modulator 21, and outputs the signals to the optical separator 24.

The optical separator 24 outputs the downlink optical signals SPdla, SPdlb received from the optical amplifier 23A to the optical antenna 25. For example, the optical separator 24 is a multiplexer/demultiplexer that outputs lights of wavelengths λ1a, λ1b received from the optical amplifier 23A to the optical antenna 25, and outputs lights of wavelengths λ2a, λ2b received from the optical antenna 25 to the optical amplifier 23B.

The earth station device 101 transmits the downlink optical signals SPdla, SPdlb to the satellite station device 201 via the optical antenna 25. More specifically, the optical amplifier 23A spatially transmits the amplified downlink optical signals SPdla, SPdlb to the satellite station device 201 via the optical separator 24 and the optical antenna 25.

The satellite station device 201 receives the downlink optical signals SPdla, SPdlb from the earth station device 101 via the optical antenna 45. More specifically, the optical antenna 45 receives the downlink optical signals SPdla, SPdlb from the earth station device 101.

The optical separator 44 outputs the downlink optical signals SPdla, SPdlb received by the optical antenna 45 to the optical amplifier 43A. For example, the optical separator 44 is a multiplexer/demultiplexer that outputs lights of wavelengths λ1a, λ1b received from the optical antenna 45 to the optical amplifier 43A, and outputs lights of wavelengths λ2a, λ2b received from the optical amplifier 43B to the optical antenna 45.

The optical amplifier 43A receives the downlink optical signals SPd1a, SPd1b from the earth station device 101 via the optical antenna 45 and the optical separator 44. The optical amplifier 43A amplifies the received downlink optical signals SPdla, SPd1b, and outputs the signals to the optical demodulator 41.

The optical demodulator 41 generates an analog signal SAd that is an electric signal of a level corresponding to the intensity of the downlink optical signals SPdla, SPdlb received from the optical amplifier 43A. More specifically, the optical demodulator 41 is an optical demodulator including a PD (Photo Diode). The PD outputs, to the frequency converter 34A, the analog signal SAd that is an electric signal of a level corresponding to the intensity of the downlink optical signals SPdla, SPdlb received from the optical amplifier 43A. The PD may be, for example, a PIN photodiode or an avalanche photodiode.

The frequency converter 34A receives the analog signal SAd from the optical demodulator 41, and generates an RF signal SRd based on the received analog signal SAd. More specifically, the frequency converter 34A generates the RF signal SRd by up-converting or down-converting the frequency of the analog signal SAd. The frequency converter 34A outputs the generated RF signal SRd to the amplifier 33A.

The amplifier 33A amplifies the RF signal SRd received from the frequency converter 34A, and outputs the signal to the RF separator 32.

The RF separator 32 outputs the RF signal SRd received from the amplifier 33A to the RF antenna 31 during the downlink communication period CPd. More specifically, the RF separator 32 is a switch capable of switching the connection between the amplifiers 33A, 33B and the RF antenna 31. The RF separator 32 connects the amplifier 33A and the RF antenna 31 during the downlink communication period CPd, and connects the amplifier 33B and the RF antenna 31 during the uplink communication period CPu, according to a control signal received from a switch controller (not shown).

The amplifier 33A transmits the amplified RF signal SRd to the communication terminal 121 via the RF separator 32 and the RF antenna 31.

### (Uplink communication)

The RF antenna 31 receives the RF signal SRu including communication data from the communication terminal 121.

The amplifier 33B receives the RF signal SRu from the communication terminal 121 via the RF antenna 31 and the RF separator 32 during the uplink communication period CPu. The amplifier 33B amplifies the received RF signal SRu, and outputs the signal to the frequency converter 34B.

The frequency converter 34B receives the RF signal SRu from the amplifier 33B, and generates an analog signal SAu based on the received RF signal SRu. More specifically, the frequency converter 34B generates the analog signal SAu by down-converting or up-converting the frequency of the RF signal SRu. The analog signal SAu may be an IF-band signal or an RF-band signal. The frequency converter 34B outputs the generated analog signal SAu to the optical modulator 42.

The optical modulator 42 receives the analog signal SAu from the frequency converter 34B, and generates uplink optical signals SPula, SPulb by optically modulating the received analog signal SAu. The optical modulator 42 outputs the generated uplink optical signals SPula, SPulb to the optical amplifier 43B.

For example, the optical modulator 42 generates the uplink optical signals SPula, SPulb that are intensity-modulated based on the analog signal SAu. More specifically, the optical modulator 42 is a direct modulation type optical modulator that includes an LD. The LD outputs, to the optical amplifier 43B, the uplink optical signals SPula, SPu1b, the intensity of which corresponds to the level of the analog signal SAu received from the frequency converter 34B.

The optical modulator 42 may be an external modulation type optical modulator that includes an LD and an external modulator. In this case, the LD outputs light of a constant intensity to the external modulator. Using the light received from the LD, the external modulator outputs, to the optical amplifier 43B, the uplink optical signals SPula, SPu1b, the intensity of which corresponds to the level of the analog signal SAu received from the frequency converter 34B. The external modulator may be, for example, an electro-absorption modulator or a Mach-Zehnder modulator.

The optical amplifier 43B amplifies the uplink optical signals SPula, SPulb received from the optical modulator 42, and outputs the signals to the optical separator 44.

The optical separator 44 outputs the uplink optical signals SPula, SPulb received from the optical amplifier 43B to the optical antenna 45.

The satellite station device 201 transmits the uplink optical signals SPula, SPulb to the earth station device 101 via the optical antenna 45. More specifically, the optical amplifier 43B spatially transmits the amplified uplink optical signals SPula, SPulb to the earth station device 101 via the optical separator 44 and the optical antenna 45.

The earth station device 101 receives the uplink optical signals SPula, SPulb from the satellite station device 201 via the optical antenna 25. More specifically, the optical antenna 25 receives the uplink optical signals SPula, SPulb from the satellite station device 201.

The optical separator 24 outputs the uplink optical signals SPula, SPulb received by the optical antenna 25 to the optical amplifier 23B.

The optical amplifier 23B receives the uplink optical signals SPula, SPulb from the satellite station device 201 via the optical antenna 25 and the optical separator 24. The optical amplifier 23B amplifies the received uplink optical signals SPula, SPu1b, and outputs the signals to the optical demodulator 22.

The optical demodulator 22 generates an analog signal SAu that is an electric signal of a level corresponding to the intensity of the uplink optical signals SPula, SPulb received from the optical amplifier 23B. More specifically, the optical demodulator 22 is an optical demodulator including a PD. The PD outputs, to the analog transmission/reception unit 10, the analog signal SAd that is an electric signal of a level corresponding to the intensity of the uplink optical signals SPula, SPulb received from the optical amplifier 23B. The PD may be, for example, a PIN photodiode or an avalanche photodiode.

The analog transmission/reception unit 10 transmits the analog signal SAu received from the optical demodulator 22 to the base station device 111.

In the conventional communication system using the satellite station device, the propagation path is longer than in the communication system that does not use the satellite station device, resulting in a large transmission delay. In contrast, the optical communication system 301 is configured to use optical signals including analog signals for information transmission between the earth station device 101 and the satellite station device 201, whereby a transmission delay caused by the satellite station device 201 can be reduced, compared to the configuration using optical signals including digital signals.

### [Operation flow]

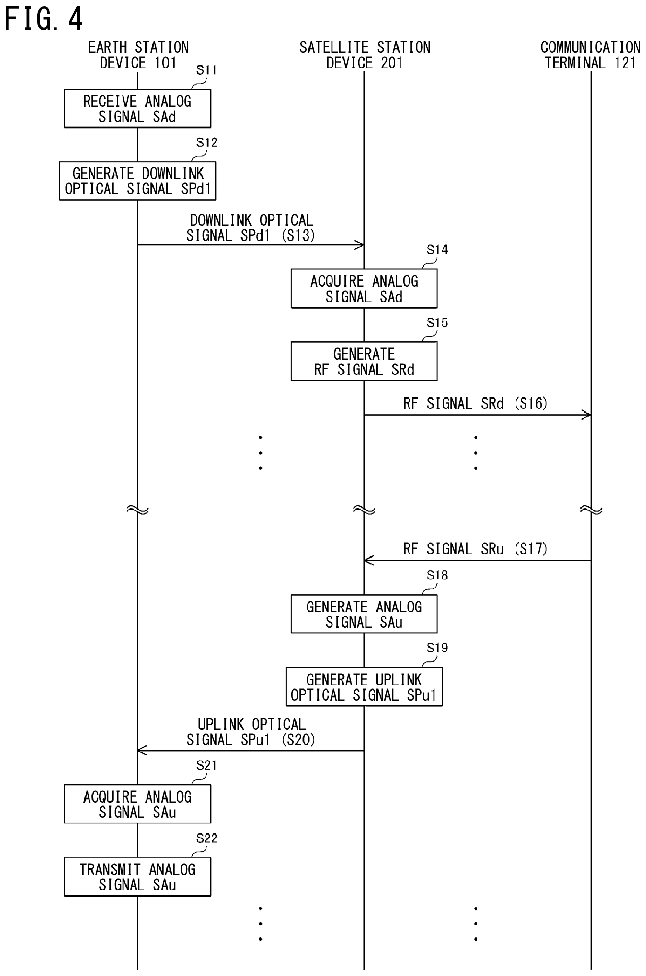

FIG. 4 shows an example of a communication sequence in the optical communication system according to the first embodiment of the present disclosure.

With reference to FIG. 4, first, the earth station device 101 receives an analog signal SAd including communication data from the base station device 111 (step S11).

Next, the earth station device 101 generates downlink optical signals SPdla, SPd1b that are intensity-modulated based on the analog signal SAd (step S12).

Next, the earth station device 101 transmits the amplified downlink optical signals SPdla, SPdlb to the satellite station device 201 via the optical antenna 25 (step S13).

Next, the satellite station device 201 performs information transmission using the downlink optical signals SPdla, SPdlb with the earth station device 101. More specifically, the satellite station device 201 receives the downlink optical signals SPdla, SPdlb from the earth station device 101 via the optical antenna 45, and acquires the analog signal SAd from the downlink optical signals SPdla, SPdlb (step S14).

Next, the satellite station device 201 generates an RF signal SRd by up-converting the frequency of the analog signal SAd (step S15).

Next, the satellite station device 201 performs information transmission using the RF signal SRd with the communication terminal 121. More specifically, the satellite station device 201 transmits the amplified RF signal SRd to the communication terminal 121 via the RF antenna 31 during the downlink communication period CPd (step S16).

Next, the satellite station device 201 performs information transmission using the RF signal SRu with the communication terminal 121. More specifically, the satellite station device 201 receives the RF signal SRu including the communication data from the communication terminal 121 during the uplink communication period CPu (step S17).

Next, the satellite station device 201 generates an analog signal SAu by down-converting the frequency of the amplified RF signal SRu (step S18).

Next, the satellite station device 201 generates uplink optical signals SPula, SPulb that are intensity-modulated based on the analog signal SAu (step S19).

Next, the satellite station device 201 performs information transmission using the uplink optical signals SPula, SPu1b with the earth station device 101. More specifically, the satellite station device 201 transmits the amplified uplink optical signals SPula, SPulb to the earth station device 101 via the optical antenna 45 (step S20).

Next, the earth station device 101 receives the uplink optical signals SPula, SPulb from the satellite station device 201 via the optical antenna 25, and acquires the analog signal SAu from the uplink optical signals SPula, SPulb (step S21).

Next, the earth station device 101 transmits the analog signal SAu to the base station device 111 (step S22).

The optical communication system 301 according to the first embodiment of the present disclosure is configured to perform both the downlink communication and the uplink communication. However, the present disclosure is not limited thereto. For example, the optical communication system 301 may be configured to perform the downlink communication without performing the uplink communication. In this case, the satellite station device 201 does not receive the RF signal SRu from the communication terminal 121 and does not transmit the uplink optical signal SPul to the earth station device 101. Alternatively, for example, the optical communication system 301 may be configured to perform the uplink communication without performing the downlink communication. In this case, the satellite station device 201 does not receive the downlink optical signal SPd1 from the earth station device 101 and does not transmit the RF signal SRd to the communication terminal 121.

In the optical communication system 301 according to the first embodiment of the present disclosure, the earth station device 101 is configured to transmit the downlink optical signal SPd1 including the analog signal SAd to the satellite station device 201, and the satellite station device 201 is configured to transmit the uplink optical signal SPul including the analog signal SAu to the earth station device 101. However, the present disclosure is not limited thereto. One of the earth station device 101 and the satellite station device 201 may be configured to generate and transmit optical signals including digital signals. Specifically, for example, the earth station device 101 receives a digital signal including communication data from the base station device 111, generates a downlink optical signal including the received digital signal, and transmits the generated downlink optical signal to the satellite station device 201. Alternatively, for example, the satellite station device 201 receives the RF signal SRu including communication data from the communication terminal 121, generates an uplink optical signal including a digital signal based on the received RF signal SRu, and transmits the generated uplink optical signal to the earth station device 101.

In the optical communication system 301 according to the first embodiment of the present disclosure, the satellite station device 201 is configured to perform the relay process according to TDD based on the timing of the clock of the satellite station device 201. However, the present disclosure is not limited thereto. The satellite station device 201 may be configured to perform the relay process according to TDD based on the timing of the clock of the communication terminal 121. That is, the downlink communication period CPd and the uplink communication period CPu may be set based on transmission/reception timings of the RF signals SRd, SRu by the RF antenna in the communication terminal 121. In this case, a transmission delay between the satellite station device 201 and the communication terminal 121 may cause a necessity to process the RF signals SRd, SRu in parallel in the satellite station device 201. In this case, the satellite station device 201 is provided with, for example, a circulator instead of the RF separator 32 that is a switch.

In the optical communication system 301 according to the first embodiment of the present disclosure, the wavelengths λ1a, λ1b of the downlink optical signals SPdla, SPdlb are different from the wavelengths λ2a, λ2b of the uplink optical signals SPula, SPulb. However, the present disclosure is not limited thereto. For example, the wavelength λ1a and the wavelength λ2a may be the same, and the wavelength λ1b and the wavelength λ2b may be the same. In this case, for example, the earth station device 101 is provided with an optical circulator instead of the optical separator 24 that is a multiplexer/demultiplexer, and the satellite station device 201 is provided with an optical circulator instead of the optical separator 44 that is a multiplexer/demultiplexer.

In the optical communication system 301 according to the first embodiment of the present disclosure, the earth station device 101 generates the downlink optical signal SPdla having the wavelength λ1a and the downlink optical signal SPdlb having the wavelength λ1b. However, the present disclosure is not limited thereto. The earth station device 101 may be configured to receive one analog signal SAd from the base station device 111, and generate a downlink optical signal SPd1 having a single wavelength and including the received analog signal SAd.

In the optical communication system 301 according to the first embodiment of the present disclosure, the satellite station device 201 is configured to generate the uplink optical signal SPula having the wavelength λ2a and the uplink optical signal SPulb having the wavelength λ2b. However, the present disclosure is not limited thereto. The satellite station device 201 may be configured to receive one RF signal SRu from the communication terminal 121, and generate an uplink optical signal SPul having a single wavelength and including an analog signal SAu based on the received RF signal SRu.

The earth station device 101 according to the first embodiment of the present disclosure is configured to transmit the downlink optical signals SPdla, SPdlb to the satellite station device 201 and receive the uplink optical signals SPula, SPulb from the satellite station device 201 via the common optical antennal 25. However, the present disclosure is not limited thereto. The earth station device 101 may be provided with an optical antenna 25A as an optical antenna 25 for transmitting the downlink optical signals SPdla, SPdlb and an optical antenna 25B as an optical antenna 25 for receiving the uplink optical signals SPula, SPulb. In this case, the earth station device 101 is not provided with the optical separator 24.

The satellite station device 201 according to the first embodiment of the present disclosure is configured to receive the downlink optical signals SPdla, SPdlb from the earth station device 101 and transmit the uplink optical signals SPula, SPulb to the earth station device 101, via the common optical antenna 45. However, the present disclosure is not limited thereto. The satellite station device 201 may be provided with an optical antenna 45A as an optical antenna 45 for receiving the downlink optical signals SPdla, SPdlb and an optical antenna 45B as an optical antenna 45 for transmitting the uplink optical signals SPula, SPulb. In this case, the satellite station device 201 is not provided with the optical separator 44.

The satellite station device 201 according to the first embodiment of the present disclosure is configured to relay the analog signals SAd, SAu according to the bent-pipe method between the earth station device 101 and the communication terminal 121. However, the present disclosure is not limited thereto. The satellite station device 201 may be configured to perform some kind of signal processing such as modulation and demodulation of the analog signals SAd, SAu.

The satellite station device 201 according to the first embodiment of the present disclosure is configured to perform transmission and reception of the RF signals SRd, SRu to and from the communication terminal 121 according to the direct access method. However, the present disclosure is not limited thereto. The satellite station device 201 may be configured to transmit the RF signal SRd to the communication terminal 121 via another base station, and receive the RF signal SRu from the communication terminal 121 via another base station.

The satellite station device 201 according to the first embodiment of the present disclosure includes the frequency converters 34A, 34B. However, the present disclosure is not limited thereto. The satellite station device 201 may not necessarily include the frequency converters 34A, 34.

Next, another embodiment of the present disclosure will be described with reference to the drawings. In the drawings, the same or corresponding parts are denoted by the same reference signs, and descriptions thereof are not repeated.

### <Second embodiment>

The present embodiment relates to an optical communication system 302 in which a phase-modulated optical signal is transmitted, compared to the optical communication system 301 according to the first embodiment. The optical communication system 302 is the same as the optical communication system 301 of the first embodiment except for the contents described below.

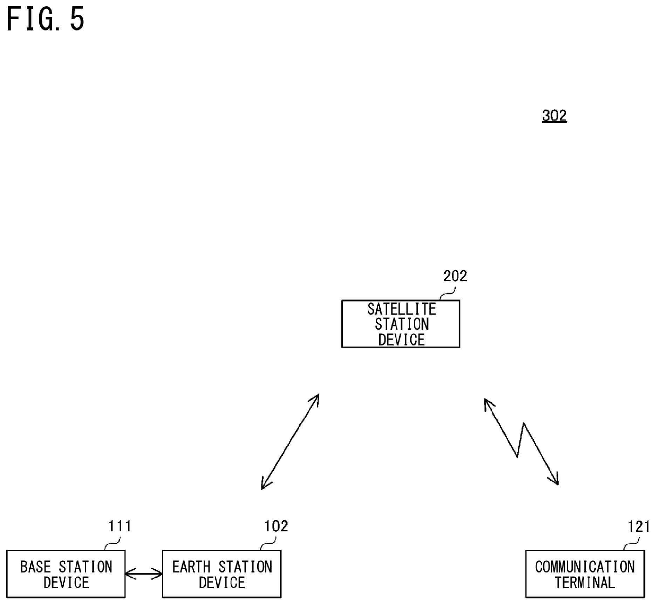

FIG. 5 shows a configuration of an optical communication system according to the second embodiment of the present disclosure. With reference to FIG. 5, compared to the optical communication system 301, the optical communication system 302 includes an earth station device 102 instead of the earth station device 101 and includes a satellite station device 202 instead of the satellite station device 201.

For example, the earth station device 102 generates a plurality of downlink optical signals SPd2 having different wavelengths. More specifically, the earth station device 102 generates a downlink optical signal SPd2a as a downlink optical signal SPd2 having a wavelength λ1a and a downlink optical signal SPd2b as a downlink optical signal SPd2 having a wavelength λ1b, and transmits the generated downlink optical signals SPd2a, SPd2b to the satellite station device 202. The earth station device 102 may generate and transmit three or more downlink optical signals SPd2 having different wavelengths.

For example, the satellite station device 202 generates a plurality of uplink optical signals SPu2 having different wavelengths. More specifically, the satellite station device 202 generates an uplink optical signal SPu2a as an uplink optical signal SPu2 having a wavelength λ2a and an uplink optical signal SPu2b as an uplink optical signal SPu2 having a wavelength λ2b, and transmits the generated uplink optical signals SPu2a, SPd2b to the earth station device 102. The satellite station device 202 may generate and transmit three or more uplink optical signals SPu2 having different wavelengths.

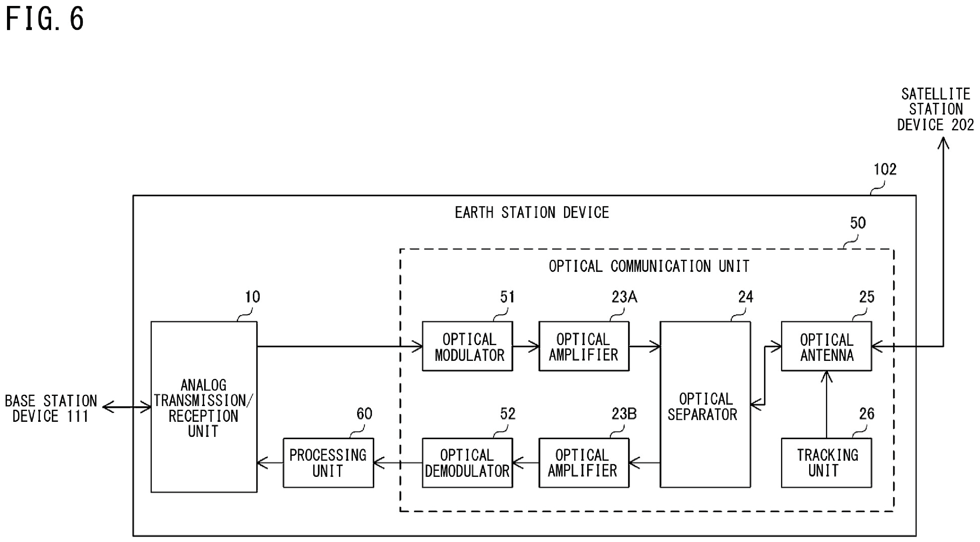

FIG. 6 shows a configuration of an earth station device according to the second embodiment of the present disclosure. With reference to FIG. 6, compared to the earth station device 101, the earth station device 102 includes an optical communication unit 50 instead of the optical communication unit 20, and further includes a processing unit 60. Compared to the optical communication unit 20, the optical communication unit 50 includes an optical modulator 51 instead of the optical modulator 21, and an optical demodulator 52 instead of the optical demodulator 22.

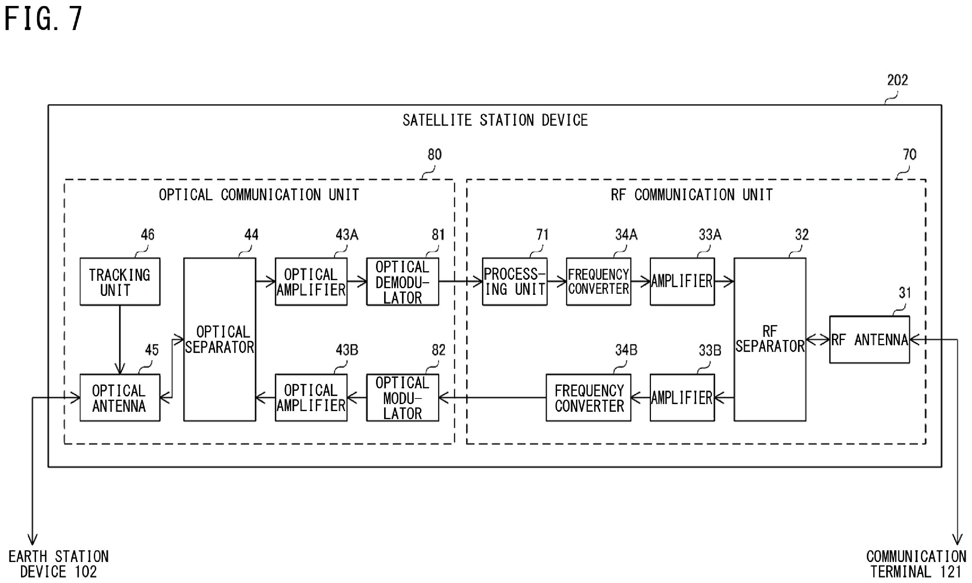

FIG. 7 shows a configuration of a satellite station device according to the second embodiment of the present disclosure. With reference to FIG. 7, compared to the satellite station device 201, the satellite station device 202 includes an RF communication unit 70 instead of the RF communication unit 30, and an optical communication unit 80 instead of the optical communication unit 40. Compared to the RF communication unit 30, the RF communication unit 70 further includes a processing unit 71. Compared to the optical communication unit 40, the optical communication unit 80 includes an optical demodulator 81 instead of the optical demodulator 41, and an optical modulator 82 instead of the optical modulator 42.

### (Downlink communication)

With reference to FIG. 6 and FIG. 7, for example, the optical modulator 51 in the earth station device 102 generates downlink optical signals SPd2a, SPd2b that are phase-modulated based on the analog signal SAd. More specifically, the optical modulator 51 is an external modulation type optical modulator including an LD and an external modulator. In this case, the LD outputs light of a constant intensity, having a frequency ω1a, to the external modulator. Using the light received from the LD, the external modulator outputs the downlink optical signals SPd2a, SPd2b, the phase of which corresponds to the level of the analog signal SAd received from the analog transmission/reception unit 10, to the optical amplifier 23A. The external modulator is, for example, a lithium niobate modulator.

The optical amplifier 23A amplifies the downlink optical signals SPd2a, SPd2b received from the optical modulator 51, and spatially transmits the amplified downlink optical signals SPd2a, SPd2b to the satellite station device 202 via the optical separator 24 and the optical antenna 25.

The optical amplifier 43A in the satellite station device 202 receives the downlink optical signals SPd2a, SPd2b from the earth station device 102 via the optical antenna 45 and the optical separator 44. The optical amplifier 43A amplifies the received downlink optical signals SPd2a, SPd2b, and outputs the signals to the optical demodulator 81.

The optical demodulator 81 generates a phase-modulated signal that is an electric signal of a phase corresponding to the phase of the downlink optical signals SPd2a, SPd2b received from the optical amplifier 43A. More specifically, the optical demodulator 81 is an optical demodulator including a PD. The PD receives a beat signal obtained by making the downlink optical signals SPd2a, SPd2b interfere with a local optical signal having a frequency ω2a, and outputs, to the processing unit 71, a phase-modulated signal having a carrier frequency equivalent to an absolute value of a difference between the frequencies ω1a and ω2a. The PD may be, for example, a PIN photodiode, an avalanche photodiode, or a balanced photodiode.

The processing unit 71 receives the phase-modulated signal from the optical demodulator 81, and generates an analog signal SAd that is an electric signal of a level corresponding to the phase of the phase-modulated signal. The processing unit 71 outputs the generated analog signal SAd to the frequency converter 34A.

The frequency converter 34A receives the analog signal SAd from the processing unit 71, generates an RF signal SRd based on the received analog signal SAd, and outputs the generated RF signal SRd to the amplifier 33A.

The amplifier 33A amplifies the RF signal SRd received from the frequency converter 34A, and transmits the amplified RF signal SRd to the communication terminal 121 via the RF separator 32 and the RF antenna 31.

### (Uplink communication)

The amplifier 33B receives the RF signal SRu from the communication terminal 121 via the RF antenna 31 and the RF separator 32 during the uplink communication period CPu. The amplifier 33B amplifies the received RF signal SRu, and outputs the signal to the frequency converter 34B.

The frequency converter 34B receives the RF signal SRu from the amplifier 33B, generates an analog signal SAu based on the received RF signal SRu, and outputs the generated analog signal SAu to the optical modulator 82.

The optical modulator 82 generates uplink optical signals SPu2a, SPu2b that are phase-modulated based on the analog signal SAu. More specifically, the optical modulator 82 is an external modulation type optical modulator including an LD and an external modulator. In this case, the LD outputs light of a constant intensity, having a frequency ω1b, to the external modulator. Using the light received from the LD, the external modulator outputs the uplink optical signals SPu2a, SPu2b, the phase of which corresponds to the level of the analog signal SAd received from the frequency converter 34B, to the optical amplifier 43B. The external modulator is, for example, a lithium niobate modulator.

The optical amplifier 43B amplifies the uplink optical signals SPu2a, SPu2b received from the optical modulator 82, and spatially transmits the amplified uplink optical signals SPu2a, SPu2b to the earth station device 102 via the optical separator 44 and the optical antenna 45.

The optical amplifier 23B in the earth station device 102 receives the uplink optical signals SPu2a, SPu2b from the satellite station device 202 via the optical antenna 25 and the optical separator 24. The optical amplifier 23B amplifies the received uplink optical signals SPu2a, SPu2b, and outputs the signals to the optical demodulator 52.

The optical demodulator 52 generates a phase-modulated signal that is an electric signal of a phase corresponding to the phase of the uplink optical signals SPu2a, SPu2b received from the optical amplifier 23B. More specifically, the optical demodulator 52 is an optical demodulator including a PD. The PD receives a beat signal obtained by making the uplink optical signals SPu2a, SPu2b interfere with a local optical signal having a frequency ω2b, and outputs, to the processing unit 60, a phase-modulated signal having a carrier frequency equivalent to an absolute value of a difference between the frequencies ω1b and ω2b. The PD may be, for example, a PIN photodiode, an avalanche photodiode, or a balanced photodiode.

The processing unit 60 receives the phase-modulated signal from the optical demodulator 52, and generates an analog signal SAu that is an electric signal of a level corresponding to the phase of the received phase-modulated signal. The processing unit 60 outputs the generated analog signal SAu to the analog transmission/reception unit 10.

The analog transmission/reception unit 10 transmits the analog signal SAu received from the processing unit 60 to the base station device 111.

In the optical communication system 302 according to the second embodiment of the present disclosure, the earth station device 102 is configured to generate the downlink optical signals SPd2a, SPd2b that are phase-modulated based on the analog signal SAd, and transmit the downlink optical signals SPd2a, SPd2b to the satellite station device 202. However, the present disclosure is not limited thereto. The earth station device 102 may be configured to generate downlink optical signals SPd3a, SPd3b that are frequency-modulated based on the analog signal SAd instead of the downlink optical signals SPd2a, SPd2b, and transmit the downlink optical signals SPd3a, SPd3b to the satellite station device 202.

Alternatively, the earth station device 102 may be configured to generate downlink optical signals SPdla, SPdlb that are intensity-modulated based on the analog signal SAd instead of the downlink optical signals SPd2a, SPd2b, and transmit the downlink optical signals SPdla, SPdlb to the satellite station device 202. In this case, the earth station device 102 includes the above-described optical modulator 21 instead of the optical modulator 51.

In the optical communication system 302 according to the second embodiment of the present disclosure, the satellite station device 202 is configured to generate the uplink optical signals SPu2a, SPu2b that are phase-modulated based on the analog signal SAu, and transmit the uplink optical signals SPu2a, SPu2b to the earth station device 102. However, the present disclosure is not limited thereto. The satellite station device 202 may be configured to generate uplink optical signals SPu3a, SPu3b that are frequency-modulated based on the analog signal SAd instead of the uplink optical signals SPu2a, SPu2b, and transmit the uplink optical signals SPu3a, SPu3b to the earth station device 102.

Alternatively, the satellite station device 202 may be configured to generate uplink optical signals SPula, SPulb that are intensity-modulated based on the analog signal SAd instead of the uplink optical signals SPu2a, SPu2b, and transmit the uplink optical signals SPu1a, SPulb to the earth station device 102. In this case, the satellite station device 202 includes the above-described optical modulator 42 instead of the optical modulator 82.

In the optical communication system 302 according to the second embodiment of the present disclosure, the earth station device 102 is configured to generate the downlink optical signal SPd2a having the wavelength λ1a and the downlink optical signal SPd2b having the wavelength λ1b. However, the present disclosure is not limited thereto. The earth station device 102 may be configured to generate a downlink optical signal SPd2 having a single wavelength.

In the optical communication system 302 according to the second embodiment of the present disclosure, the satellite station device 202 is configured to generate the uplink optical signal SPula having the wavelength λ2a and the uplink optical signal SPu2b having the wavelength λ2b. However, the present disclosure is not limited thereto. The satellite station device 202 may be configured to generate an uplink optical signal SPu2 having a single wavelength.

The above embodiments are merely illustrative in all aspects and should not be recognized as being restrictive. The scope of the present disclosure is defined by the scope of the claims rather than by the description above, and is intended to include meaning equivalent to the scope of the claims and all modifications within the scope.

The processes (functions) of the above-described embodiments may be realized by processing circuitry including one or more processors. In addition to the one or more processors, the processing circuitry may include an integrated circuit or the like in which one or more memories, various analog circuits, and various digital circuits are combined. The one or more memories have, stored therein, programs (instructions) that cause the one or more processors to execute the processes. The one or more processors may execute the processes according to the program read out from the one or more memories, or may execute the processes according to a logic circuit designed in advance to execute the processes. The above processors may include a CPU (Central Processing Unit), a GPU (Graphics Processing Unit), a DSP (Digital Signal Processor), an FPGA (Field Programmable Gate Array), an ASIC (Application Specific Integrated Circuit), etc., which are compatible with computer control. The physically separated processors may execute the processes in cooperation with each other. For example, the processors installed in physically separated computers may execute the processes in cooperation with each other through a network such as a LAN (Local Area Network), a WAN (Wide Area Network), or the Internet. The program may be installed in the memory from an external server device or the like through the network. Alternatively, the program may be distributed in a state of being stored in a recording medium such as a CD-ROM (Compact Disc Read Only Memory), a DVD-ROM (Digital Versatile Disk Read Only Memory), or a semiconductor memory, and may be installed in the memory from the recording medium.

The above description includes the features in the additional note below.

### [Additional note 1]

An optical communication system comprising:
an earth station device; and
a satellite station device configured to perform a relay process of relaying information that is transmitted and received between a communication terminal and the earth station device, wherein
in the relay process, the satellite station device performs information transmission with the communication terminal, using RF signals, and performs information transmission with the earth station device, using optical signals including analog signals,
the earth station device is provided in the troposphere,
the satellite station device is provided in the stratosphere, and
the satellite station device performs the relay process according to a TDD method based on a timing of a clock of the satellite station device.

### REFERENCE SIGNS LIST

10 analog transmission/reception unit
20 optical communication unit
21 optical modulator
22 optical demodulator
23A, 23B optical amplifier
24 optical separator
25 optical antenna
26 tracking unit
30 RF communication unit
31 RF antenna
32 RF separator
33A, 33B amplifier
34A, 34B frequency converter
40 optical communication unit
41 optical demodulator
42 optical modulator
43A, 43B optical amplifier
44 optical separator
45 optical antenna
46 tracking unit
50 optical communication unit
51 optical modulator
52 optical demodulator
60 processing unit
70 RF communication unit
71 processing unit
80 optical communication unit
81 optical demodulator
82 optical modulator
101, 102 earth station device
111 base station device
121 communication terminal
201, 202 satellite station device
301, 302 optical communication system

## Claims

1. An optical communication system comprising:
an earth station device; and
a satellite station device configured to perform a relay process of relaying information that is transmitted and received between a communication terminal and the earth station device, wherein
in the relay process, the satellite station device performs information transmission with the communication terminal, using RF (Radio Frequency) signals, and performs information transmission with the earth station device, using optical signals including analog signals.

2. The optical communication system according to claim 1, wherein
the earth station device generates a first optical signal including a first analog signal, and transmits the generated first optical signal to the satellite station device, and
the satellite station device acquires the first analog signal from the first optical signal received from the earth station device, and transmits a first RF signal based on the acquired first analog signal to the communication terminal.

3. The optical communication system according to claim 2, wherein
the earth station device generates the first optical signal that is intensity-modulated, phase-modulated, or frequency-modulated based on the first analog signal, and transmits the generated first optical signal to the satellite station device.

4. The optical communication system according to claim 2 or 3, wherein
the earth station device generates a plurality of first optical signals having different wavelengths, and transmits the generated plurality of first optical signals to the satellite station device.

5. An optical communication system according to any one of claims 1 to 4, wherein
the satellite station device receives a second RF signal from the communication terminal, generates a second optical signal including a second analog signal based on the received second RF signal, and transmits the generated second optical signal to the earth station device, and
the earth station device acquires the second analog signal from the second optical signal received from the satellite station device.

6. The optical communication system according to claim 5, wherein
the satellite station device generates the second optical signal that is intensity-modulated, phase-modulated, or frequency-modulated based on the second analog signal, and transmits the generated second optical signal to the earth station device.

7. The optical communication system according to claim 5 or 6, wherein
the satellite station device generates a plurality of second optical signals having different wavelengths, and transmits the generated plurality of second optical signals to the earth station device.

8. The optical communication system according to claim 1, wherein
the earth station device generates a first optical signal including a first analog signal, and transmits the first optical signal to the satellite station device via a first optical antenna,
the satellite station device receives the first optical signal from the earth station device via a second optical antenna, acquires the first analog signal from the received first optical signal, and transmits a first RF signal based on the acquired first analog signal to the communication terminal,
the satellite station device receives a second RF signal from the communication terminal, generates a second optical signal including a second analog signal based on the received second RF signal, and transmits the second optical signal to the earth station device via the second optical antenna, and
the earth station device receives the second optical signal from the satellite station device via the first optical antenna, and acquires the second analog signal from the received second optical signal.

9. The optical communication system according to claim 1, wherein
the earth station device generates a first optical signal including a first analog signal, and transmits the generated first optical signal to the satellite station device,
the satellite station device acquires the first analog signal from the first optical signal received from the earth station device, and transmits a first RF signal based on the acquired first analog signal to the communication terminal,
the satellite station device receives a second RF signal from the communication terminal, generates a second optical signal including a second analog signal based on the received second RF signal, and transmits the generated second optical signal to the earth station device,
the earth station device acquires the second analog signal from the second optical signal received from the satellite station device, and
the satellite station device relays the first analog signal and the second analog signal between the earth station device and the communication terminal according to a bent-pipe method, and transmits and receives the first RF signal and the second RF signal to and from the communication terminal according to a direct access method.

10. An earth station device comprising an optical communication unit configured to transmit and receive signals to and from a communication terminal via a satellite station device configured to transmit and receive RF signals to and from the communication terminal, wherein
the optical communication unit performs at least one of: transmission of optical signals including analog signals to the satellite station device; and reception of optical signals including analog signals from the satellite station device.

11. A satellite station device performing a relay process of relaying information that is transmitted and received between a communication terminal and an earth station device, the satellite station device comprising:
an RF communication unit configured to perform information transmission with the communication terminal using RF signals; and
an optical communication unit configured to perform information transmission with the earth station device using optical signals including analog signals.

12. A communication method performed in an optical communication system comprising an earth station device, and a satellite station device that performs a relay process of relaying information that is transmitted and received between a communication terminal and the earth station device, the method comprising:
the satellite station device performing information transmission with the communication terminal, using RF signals; and
the satellite station device performing information transmission with the earth station device, using optical signals including analog signals.
